# EUROPÄISCHE PATENTSCHRIFT

(11) **EP 0 763 231 B1**
(45) Veröffentlichungstag und Bekanntmachung des Hinweises auf die Patenterteilung: **17.03.1999**
(21) Anmeldenummer: 95919316.0
(22) Anmeldetag: 26.05.1995
(51) Int. Cl.: G10C 3/12, G10G 1/02

(54) **MUSIKINSTRUMENT, BEI DEM DIE TONAUSLÖSUNGSELEMENTE AUF LINIEN ANGEORDNET SIND**
MUSICAL INSTRUMENT WITH SOUND TRIGGERING ELEMENTS ARRANGED IN LINES
INSTRUMENT DE MUSIQUE A ELEMENTS DECLENCHANTS LE SON AGENCES EN LIGNES

(30) Priorität: 31.05.1994 DE 4419039
(43) Veröffentlichungstag der Anmeldung: 19.03.1997
(73) Patentinhaber: Schiessl, Ludwig, 83530 Schnaitsee (DE)
(72) Erfinder: Schiessl, Ludwig, 83530 Schnaitsee (DE)
(86) Internationale Anmeldenummer: DE9500668
(87) Internationale Veröffentlichungsnummer: WO9533256

(56) Entgegenhaltungen:
- WO-A-90/09650
- DE-B- 1 177 460
- DE-C- 669 896

## Beschreibung

Die Erfindung betrifft ein Musikinstrument gemäß Patentanspruch 1, besondere Ausführungsformen sind Gegenstand der Unteransprüche 2 bis 16.
Sie betrifft ferner eine Auflage auf ein Musikinstrument gemäß Anspruch 17 und 18.

### Stand der Technik:

Bisher gibt es Musikinstrumente, die als Hilfen für den Spieler über zusätzliche Einrichtungen verfügen wie
- Zuschaltung eines Rhythmusgeräts,
- Zuschaltung von Akkorden zur Melodiebegleitung entweder im Dauerbetrieb oder als rhythmisches Arpeggio,
- Möglichkeit der Abspeicherung von Musikstücken, sodaß beim Spielen dieser Musikstücke Lämpchen bei den Tonauslösungselementen aufleuchten, die jeweils als nächste zu betätigen sind,
- Anordnung der Tonauslösungselemente wie bei der Mundharmonika, wo beim Blasen nur Töne der Tonika erzeugt werden können, so daß dadurch automatisch auf die Harmonie der Tonika zurückgegriffen werden kann.

Aus der Auslegeschrift DE 1177 460 ist ein Musikinstrument bekannt, bei dem Anordnungen von beliebigen Tönen entlang von Linien dargestellt sind. Dabei sind die Töne nicht auf bestimmte Akkorde beschränkt.

### Darstellung der Erfindung:

Es ist Aufgabe der Erfindung, das Spielen von Instrumenten noch einfacher zu machen. Diese Aufgabe wird mit den Merkmalen des Patentanspruchs 1 gelöst.
Für den Spieler ergeben sich dabei als Vorteile,
- daß er die Töne des aktuellen Akkords (Tonika, Subdominante, Dominante bzw. Dominant-Sept-Akkord, entsprechende Moll- bzw. Dur-Parallelen) auf dem Instrument mit einem Blick erfassen kann,
- daß er sich bei mehreren Tonfolgen innerhalb eines Musikstücks nur an einer der Linien entlangzubewegen braucht, (Es gibt viele Lieder, besonders in den Bereichen Volksmusik, Kinderlieder und auch Schlagermusik, wo sich die Melodie in fast jedem Takt vorwiegend oder ganz aus Tönen des jeweils aktuellen Akkords zusammensetzt.)
- daß er die momentan wichtigsten Töne sehen kann und weit weniger Gefahr läuft, einen benachbarten, falschen Ton zu betätigen,
- daß er viel leichter mehrstimmig spielen kann, indem er einfach weitere Töne auf der gleichen Linie erzeugt,
- daß er, evtl. als Begleitung, ganz ohne irgendwelche Musikkenntnisse über den Tönen des aktuellen Akkords improvisieren kann, wie das beispielsweise bei der Begleitung mit einer Guitarre gemacht wird,
- daß er sich die Reihenfolge der Betätigung der Tonauslösungselemente als "Weg" oder "Figur" auf einer Fläche oder im Raum wesentlich leichter merken kann, als wenn er sie sich aufgrund der Stellen oder Abstände entlang einer einzigen, meist geraden Linie einprägen muß,
- daß man ihm die Reihenfolge der Betätigung der Tonauslösungselemente als "Weg" in Form einer Figur, eines Bildes oder eines Symbols vorgeben kann (Leiter, Dreieck, Schlange o.ä.). Auf diese Weise wird das Merken bzw. Lernen eines Musikstücks nochmal wesentlich erleichtert.

Im folgenden wird die Erfindung anhand von Ausführungsbeispielen beschrieben.

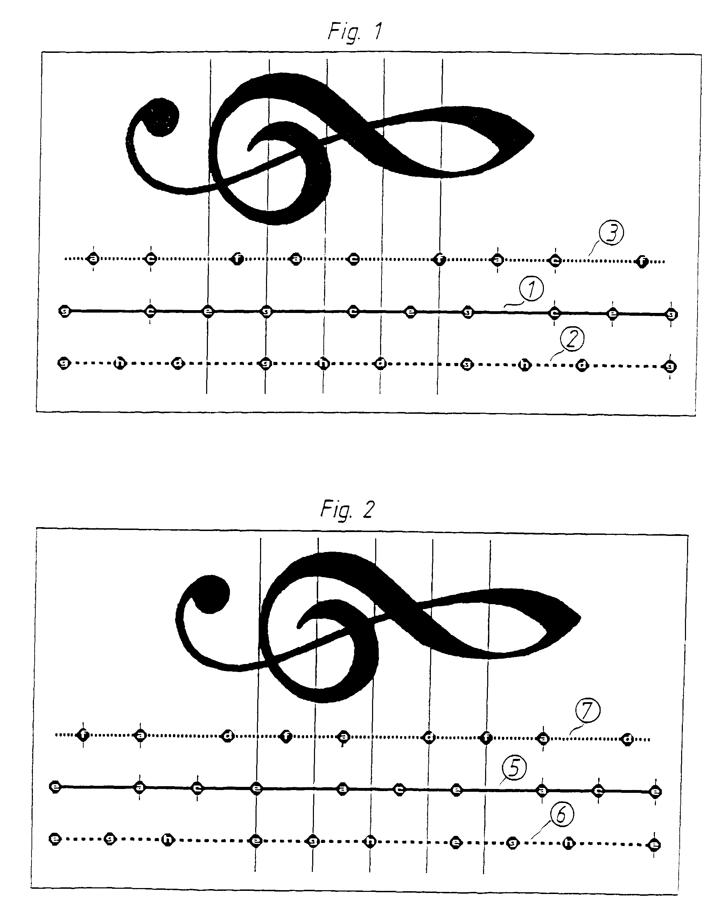

Die Figuren 1 bis 14 zeigen dabei jeweils Ansichten des Bedienungsfelds des Musikinstruments.

In den meisten Fällen ist es sinnvoll, daß die Tonauslösungselemente geordnet nach der Tonhöhe entlang der Linien liegen. (Anspruch 2)
Weiter ist es sinnvoll, die Form der jeweiligen Linien so zu wählen, daß sie sich von einer Oktave in jede weitere Oktave sinnfällig fortsetzen. (Anspruch 3)
Die Fortsetzung der Linien von einer Oktave in jede andere Oktave läßt sich auch aufgrund ihrer Farbe, Dicke, ihres Linientyps oder von charakteristischen Unterbrechungen der jeweiligen Linien für den Spieler anzeigen. (Anspruch 4)

Die meisten Musikstücke, die in einer bestimmten Tonart geschrieben sind, kann man mit drei Akkorden begleiten. Deshalb ist es sinnvoll, Linien zu diesen jeweils drei Akkorden am Musikinstrument anzubringen. Dabei sind zwei Fälle zu unterscheiden, je nachdem, ob diese drei Akkorde
a) Tonika, Dominante und Subdominante oder
b) Tonika, Dominant-Sept-Akkord und Subdominante sind.

- Zum Fall a):: Ihm entsprechen Anspruch 5 (Fig. 1) für Dur-Tonarten bzw. Anspruch 6 (Fig. 2) für Moll-Tonarten.
- Zum Fall b):: Ihm entsprechen Anspruch 7 für Dur-Tonarten bzw. Anspruch 8 für Moll-Tonarten.

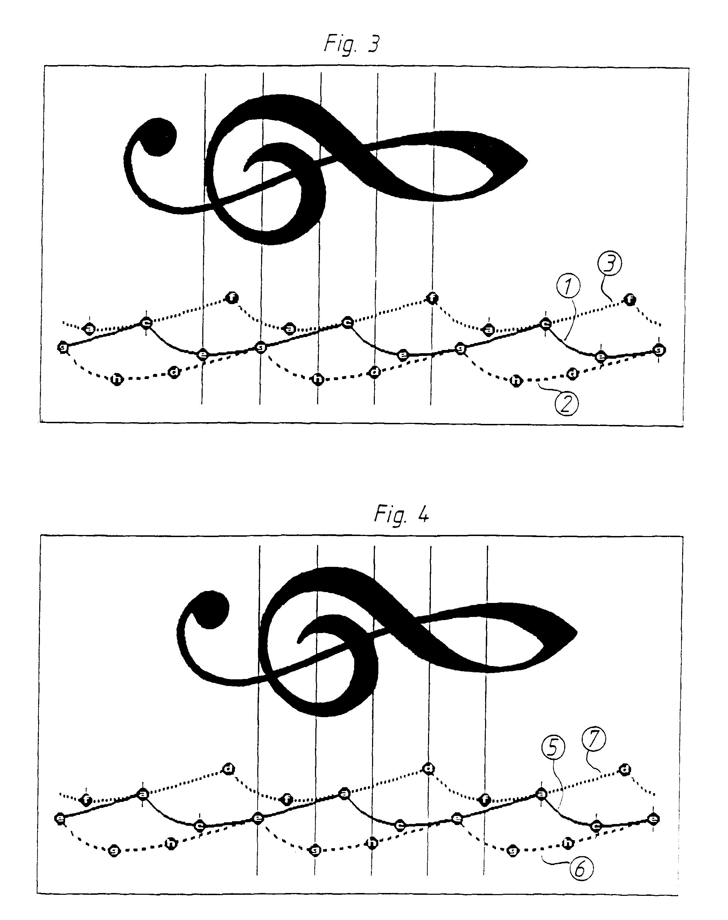

Es ist meist sinnvoll, nicht mehr als ein Tonauslösungselement für jeden erzeugbaren Ton auf dem Instrument zu haben, einerseits aus Gründen der Herstellungskosten, andererseits, um die Übersicht und damit das Spielen zu erleichtern. (Anspruch 9) Diese Forderung wird erfüllt
bei den Figuren 3 bis 11 und 14.

Schließlich erscheint es wiederum aus Gründen der Übersichtlichkeit vorteilhaft, wenn sich die Linien nicht in Punkten treffen, wo sich keine Tonauslösungselemente befinden. (Anspruch 10, Fig. 3 bis 6, 12 bis 14).

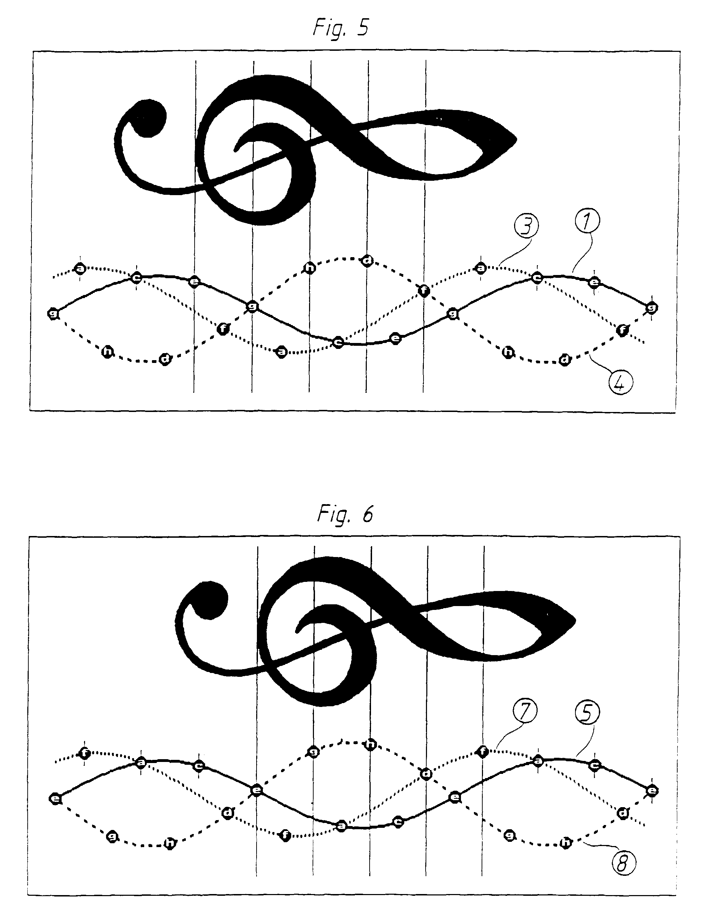

Musikinstrumente nach den Ansprüchen 7 und 8 lassen sich in besonders einfacher und übersichtlicher Form darstellen, wenn sie zugleich die Ansprüche 9 und 10 erfüllen, entsprechend Fig. 5 bzw. Fig. 6.

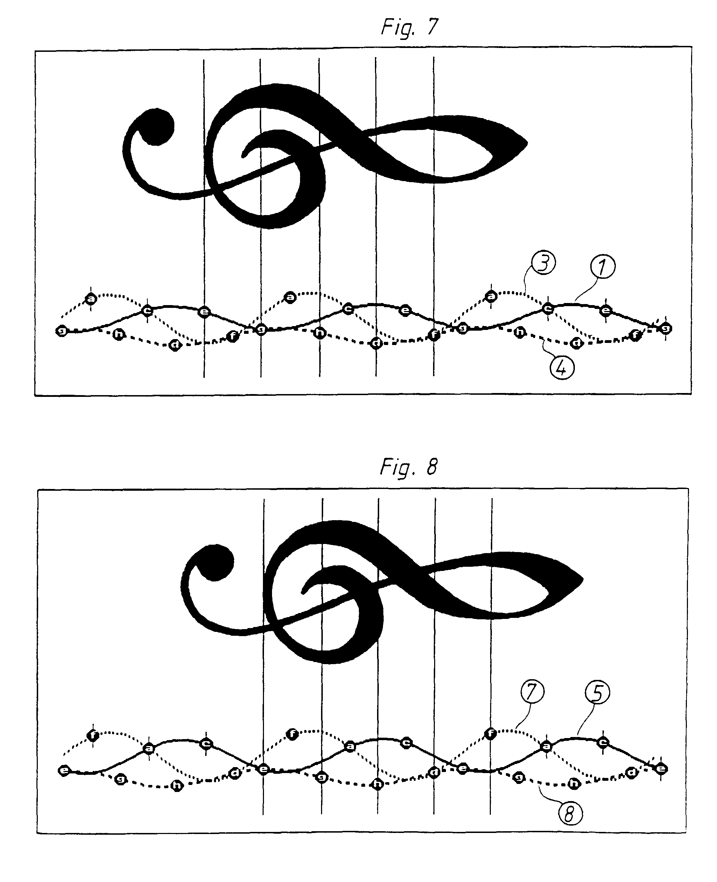

In einer prinzipiell anderen Form erscheint das Liniensystem in Fig. 7 und Fig. 8:
Dort setzen sich die Linien von einer Oktave zur nächsten "gleichsinnig" fort, d.h. der Umlaufsinn bleibt beim Übergang von einer Oktave zur nächsten erhalten.
Das Wort "Umlaufsinn" hat dabei die Bedeutung, die der Tatsache aus der Geometrie entspricht, daß jedes Dreieck bei einer Achsenspiegelung seinen Umlaufsinn ändert.
Auch bei einem solchen Aufbau des Liniensystems (Fig. 7, 8) lassen sich die Ansprüche 7 oder 8 mit Anspruch 9 und 10 verbinden.
Man kann so die Änderung des Umlaufsinns beim Übergang von einer Oktave zur nächsten (Spiegelung oben-unten wie in Fig. 5 und 6) vermeiden.

Die bisher genannten Lösungen nach den Ansprüchen 5 bis 10 haben gemeinsam, daß drei Linien zu den Akkorden einer Tonart vorhanden sind. Sie stellen damit einfache und wirksame Hilfsmittel dar, die das Erlernen, Behalten und fehlerfreie Spielen eines Instruments erleichtern.
Der Anspruch 9 bewirkt zusammen mit den Ansprüchen 5 bzw. 6 bzw. 7 bzw. 8 eine Kopplung der Linien, die fast fast automatisch zu zwei weiteren erfreulichen Folgerungen führt:
1.) Jeder Ton einer gewöhnlichen (diatonischen) Tonleiter kommt genau einmal vor, sodaß als Tonvorrat tatsächlich nur eine gewöhnliche Tonleiter nötig ist.
2.) Für die Reihenfolge der Anordnung aller Tonauslösungselemente auf dem Musikinstrument ergibt sich nahezu von selbst (jedoch nicht zwingend): Sie sind der Tonhöhe nach geordnet (in der Richtung von links nach rechts in allen Figuren).
Daher lassen sich Notenlinien der gebräuchlichen Notenschrift problemlos über das Akkordliniensystem legen, wie in den Figuren geschehen. Damit ist ein Übergang von dem Akkordliniensystem zur gebräuchlichen Notenschrift und umgekehrt ohne weiteres für jeden Betrachter leicht zu vollziehen. Somit ist ein solches Musikinstrument ein hervorragendes Hilfsmittel zum Erlernen der Notenschrift.

Darüber hinaus ermöglicht es verblüffend einfache Einblicke in die Harmonielehre und ist damit nicht zuletzt eine nützliche Unterstützung beim Komponieren neuer Musikstücke.
Der letzte Satz gilt in nochmal verstärktem Maße
- für den noch zu besprechenden Anspruch 11, bei dem jeweils zu den drei Akkordlinien einer Tonart noch weitere drei Linien hinzukommen, die den Moll- bzw. Dur-Parallelen entsprechen, wobei keine zusätzlichen Tonauslösungselemente nötig sind
- und für die Ansprüche 12 und 13, wo weitere zusätzliche Linien vorgesehen sind.

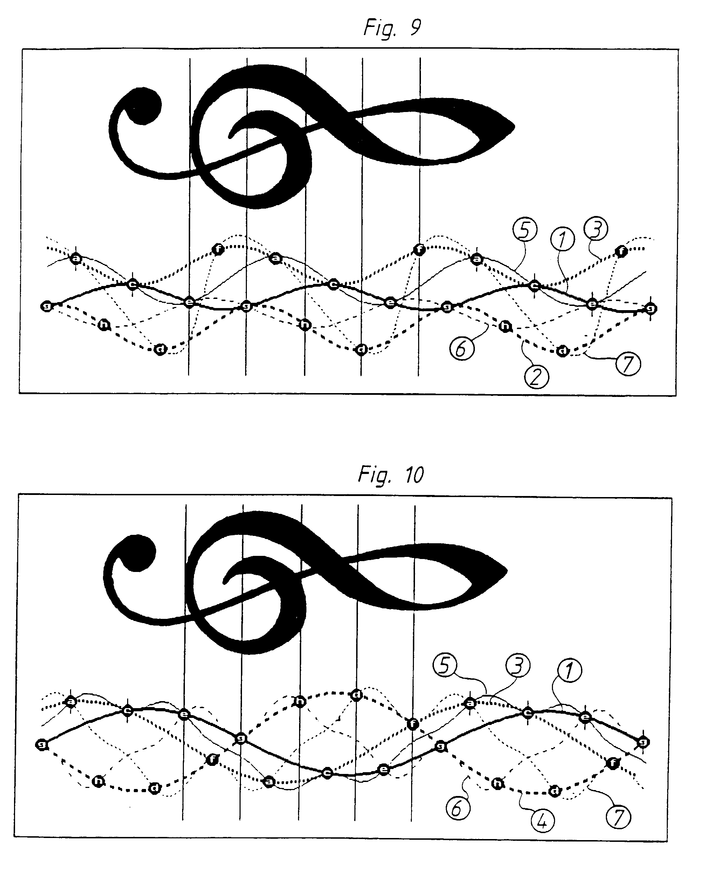

Es gibt viele Musikstücke, bei denen sowohl Dur- als auch Moll-Akkorde vorkommen. Ein Musikinstrument, bei dem die Akkorde einer Tonart und deren Parallel-Akkorde durch je eine Linie gekennzeichnet sind, bietet auch für solche komplexeren Musikstücke alle bisher genannten Vorteile.
Der Anspruch 11 stellt die Erweiterung der Ansprüche 5 bis 10 von einem System mit drei Linien zu einem System mit sechs Linien dar. (Fig. 9 bis 11)

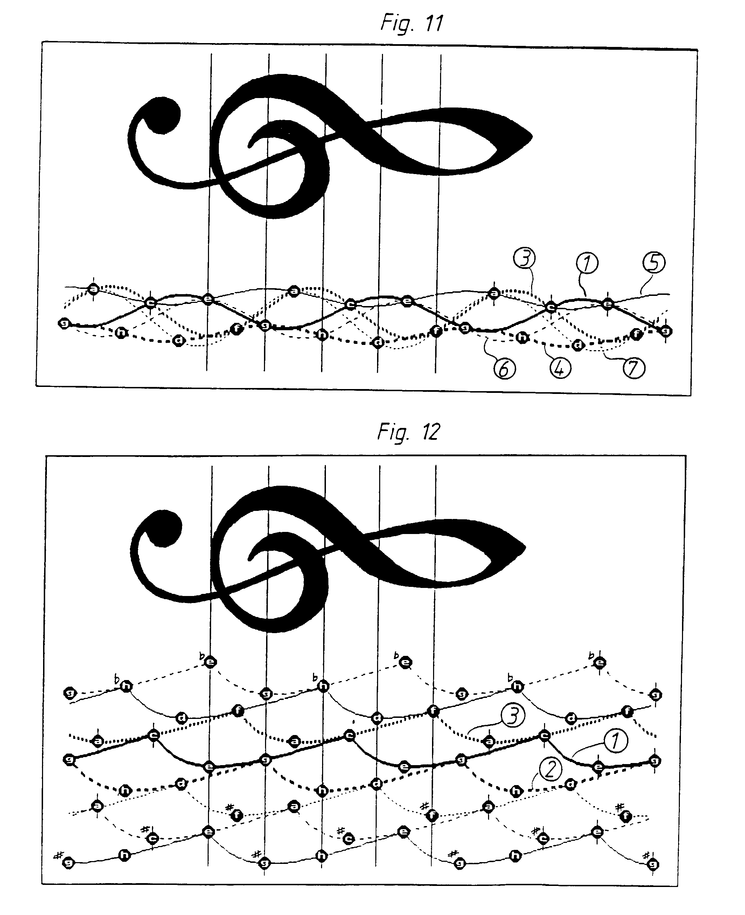

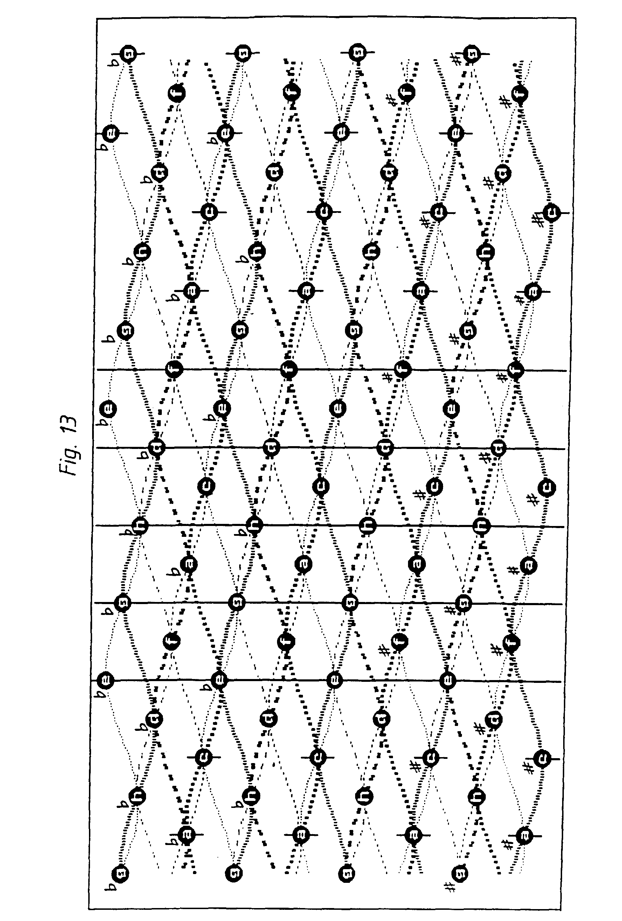

Bei den Musikinstrumenten nach den Ansprüchen 1 bis 6 läßt sich das System von drei Linien auf beliebig viele Linien ausbauen, indem man Linien für folgende oder vorhergehende Akkorde des Quintenzirkels hinzufügt,
entsprechend Anspruch 12 (Fig. 12).
Mit mehr als drei aufeinanderfolgenden Akkorden des Quintenzirkels hat der Spieler den Vorteil, verschiedene Tonarten auswählen bzw. verwenden zu können.
Schließlich läßt sich ein System von Linien angeben, bei dem alle 12 möglichen Dur- und alle 12 möglichen Moll-Akkorde gleichzeitig vorkommen,
gemäß Anspruch 13 (Fig. 13).
Dies ist aufgrund der Vielzahl der Forderungen äußerst erstaunlich und erfreulich.
In Fig. 13 sind jeweils 13 Linien gezeichnet, wobei aufgrund der enharmonischen Gleichheit
die Linie zu ges-Dur denselben Akkord beschreibt wie
die Linie zu fis-Dur und
die Linie zu es-Moll denselben Akkord wie
die Linie zu dis-Moll.

Als Linien besonders geeignet erscheinen Sinuskurven, da ihre Form die Wiederholung in jeder benachbarten Oktave von sich aus nahe legt und da ihre Wellenform sowohl die Dynamik der Musik als auch die Verwandtschaft mit den Schwingungen der Töne wiederspiegelt. Daher erscheint es sowohl aus ästhetischen Gründen als auch aus Gründen der Übersichtlichkeit vorteilhaft, den Linien eine Sinusform zu geben,
entsprechend Anspruch 14 (Fig. 5 bis 11, 13).

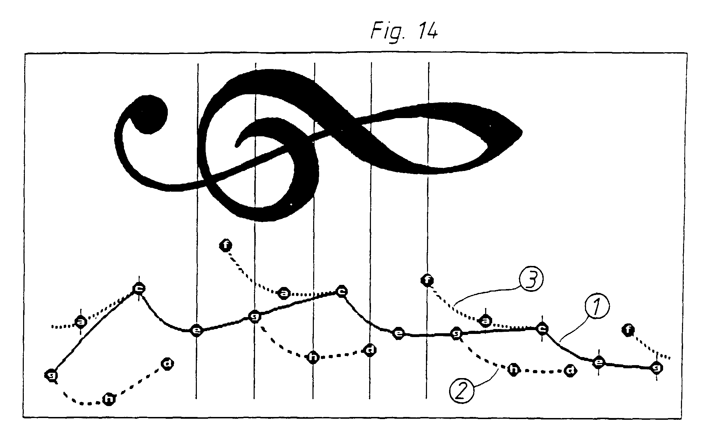

In Figur 14 wird beispielhaft gezeigt, daß die Ansprüche dieser Patentanmeldung großen Raum für phantasievolle Variationen lassen, ohne daß die Grundideen der Ansprüche beeinträchtigt werden.

Selbstverständlich lassen sich in jedem Fall Linien mit den geforderten Eigenschaften nicht nur in der Ebene anordnen, sondern auch als dreidimensionale Linien im Raum,
entsprechend Anspruch 15.

Als weitere Hilfen können zusätzliche Vorrichtungen erwünscht sein, wie sie ähnlich bei elektronischen Keyboards üblich sind, gemäß Anspruch 16.

Ein Musikinstrument mit den in den Ansprüchen 1 bis 16 geschützten Merkmalen kann man auch dadurch erhalten, daß man auf dem Bedienungsfeld eines vorhandenen Musikinstruments eine Auflage anbringt, auf der ein Akkordliniensystem wie in den Ansprüchen 1 bis 16 beschrieben aufgebracht ist,
entsprechend Anspruch 17.
Eine solche Auflage könnte aus einer Folie, einer Platte, einem Tuch oder etwas ähnlichem bestehen und muß die Betätigung der Tonauslösungselemente zulassen.

Ferner ist es sehr praktisch, wenn man mit einer solchen Auflage beim Anbringen an dem Musikinstrument zugleich die Tonhöhe der Tonauslösungselemente festlegen kann,
entsprechend Anspruch 18.
Das ist besonders voteilhaft, wenn man mehrere verschiedene von diesen Auflagen für ein Musikinstrument hat, die beim Anbringen die Töne zu den Tonauslösungselementen für jeweils eine bestimmte Tonart festlegen.

Schließlich sollen noch die Vorzüge erwähnt werden, die die farbliche Gestaltung der in dieser Anmeldung geschützten Musikinstrumente bietet:
Durch geeignete Farbwahl bei den Linien und den von ihnen begrenzten Flächen läßt sich nicht nur eine zusätzliche Unterstützung beim Erlernen und Spielen von Musikstücken und beim Improvisieren erreichen, sondern auch ein starker Anreiz, das Instrument oft zu benutzen.
Darüber hinaus bietet die ästhetische Gestaltung einen nicht zu unterschätzenden Kaufanreiz.

Am geeignetsten und hilfreichsten erscheint so ein Musikinstrument für kleine Kinder und musikalische Laien, die bisher keinen Zugang zu üblichen Instrumenten finden konnten.

### Kurze Beschreibung der Zeichnungen:

Jede Figur stellt eine mögliche Ansicht eines in den Ansprüchen genannten Musikinstruments dar, wobei der Tonumfang stets mit drei Oktaven gewählt wurde.
Die Tonauslösungselemente sind durch schwarze Kreise dargestellt, in denen mit weißen Buchstaben der zugehörige Notenwert angegeben ist.
Die verschiedenen Linien sind in unterschiedlichen Linienarten gezeichnet. Die Bezugszahlen kennzeichnen in allen Figuren die Linien zu den entsprechenden Akkorden wie folgt:
(1) Dur-Tonika
(2) Dur-Dominante
(3) Dur-Subdominante
(4) Dur-Dominant-Sept-Akkord
(5) Moll-Tonika
(6) Moll-Dominante
(7) Moll-Subdominante
(8) Moll-Dominant-Sept-Akkord

Zur besseren Orientierung wurden bei fast allen Figuren die Notenlinien der gebräuchlichen Notenschrift und der zugehörige Notenschlüssel über das Akkordliniensystem mit seinen Tonauslösungungselementen gelegt.

Um Erhöhungs- und Erniedrigungszeichen zu vermeiden, wurden der Einfachheit halber bei den meisten Figuren die Tonleitern c-Dur bzw. a-Moll verwendet. Selbstverständlich sind alle in den Ansprüchen erwähnten Musikinstrumente in jeder anderen Tonleiter herstellbar.

In Fig. 12 und 13 tauchen notwendigerweise Tonerhöhungs- und -erniedrigungszeichen auf, die neben die entsprechenden Tonauslösungselemente gezeichnet sind.

### Bester Weg zur Ausführung der Erfindung:

Als der beste Weg zur Ausführung der Erfindung erscheint ein Musikinstrument nach Anspruch 11 (Fig. 11), da hier die meisten Vorteile bei relativ einfacher Anordnung erzielt werden.

## Patentansprüche

1. Musikinstrument mit einem Bedienungsfeld, auf dem mehrere verschiedene Linien aufgebracht sind, auf denen jeweils mehrere einzeln betätigbare Tonauslösungselemente angeordnet sind, wobei alle jeweils auf einer Linie angeordneten Tonauslösungselemente nur Töne eines vorgegebenen, für jede Linie jeweils unterschiedlichen Akkords erzeugen.

2. Musikinstrument nach Anspruch 1,
dadurch gekennzeichnet,
daß die Tonauslösungselemente geordnet nach der Tonhöhe entlang der Linien liegen.

3. Musikinstrument nach Anspruch 2,
dadurch gekennzeichnet,
daß sich die Form der jeweiligen Linie mit jeder Oktave wiederholt.

4. Musikinstrument nach einem der vorgenannten Ansprüche,
dadurch gekennzeichnet,
daß sich die Linien aufgrund ihrer Farbe, Dicke, ihres Linientyps oder aufgrund von charakteristischen Linienunterbrechungen unterscheiden.

5. Musikinstrument nach einem der vorgenannten Ansprüche,
dadurch gekennzeichnet,
daß es drei Linien zu den Dur-Akkorden Tonika (1), Dominante (2) und Subdominante (3) einer Tonart enthält.

6. Musikinstrument nach einem der Ansprüche 1 bis 4,
dadurch gekennzeichnet,
daß es drei Linien zu den Moll-Akkorden Tonika (5), Dominante (6) und Subdominante (7) einer Tonart enthält.

7. Musikinstrument nach einem der Ansprüche 1 bis 4,
dadurch gekennzeichnet,
daß es drei Linien zu den Dur-Akkorden Tonika (1), Dominant-Sept-Akkord (4) und Subdominante(3) einer Tonart enthält.

8. Musikinstrument nach einem der Ansprüche 1 bis 4,
dadurch gekennzeichnet,
daß es drei Linien zu den Moll-Akkorden Tonika (5), Dominant-Sept-Akkord (8) und Subdominante(7) einer Tonart enthält.

9. Musikinstrument nach einem der vorgenannten Ansprüche,
dadurch gekennzeichnet,
daß Tonauslösungselemente, die gleichzeitig zu zwei verschiedenen Linien gehören und den gleichen Ton erzeugen, nur einmal vorkommen.

10. Musikinstrument nach einem der vorgenannten Ansprüche,
dadurch gekennzeichnet,
daß sich die Linien nur in Punkten treffen, wo sich Tonauslösungselemente befinden.

11. Musikinstrument nach einem der Ansprüche 5 bis 10,
dadurch gekennzeichnet,
daß zusätzlich zu den drei vorhandenen Linien weitere drei Linien aufgebracht sind, die den entsprechenden Moll-Parallelen zu den vorhandenen Dur-Akkorden oder den entsprechenden Dur-Parallelen zu den vorhandenen Moll-Akkorden entsprechen, unter Verwendung der vorhandenen Tonauslösungselemente.

12. Musikinstrument nach einem der Ansprüche 1 bis 4,
dadurch gekennzeichnet,
daß Linien zu mehr als drei im Quintenzirkel aufeinanderfolgenden Dur-Akkorden aufgebracht sind, wobei die Linien zu jeweils zwei im Quintenzirkel benachbarten Akkorden sich bei einem gemeinsamen Tonauslösungselement treffen.

13. Musikinstrument nach Anspruch 12
dadurch gekennzeichnet,
daß zusätzlich zu den vorhandenen Linien der Dur-Akkorde Linien zu den entsprechenden Moll-Parallelen aufgebracht sind, unter Verwendung der vorhandenen Tonauslösungselemente.

14. Musikinstrument nach einem der vorgenannten Ansprüche,
dadurch gekennzeichnet,
daß eine, mehrere oder alle Linien Sinuskurven sind.

15. Musikinstrument nach einem der vorgenannten Ansprüche,
dadurch gekennzeichnet,
daß die Linien dreidimensionale Linien im Raum sind.

16. Musikinstrument nach einem der vorgenannten Ansprüche,
dadurch gekennzeichnet,
daß eine oder mehrere der folgenden zusätzlichen Vorrichtungen am Instrument angebracht sind:
a) spezielle Auslösungselemente, bei deren Betätigung mehrere Töne eines Akkords zu einer Linie gleichzeitig erklingen,
b) spezielle Auslösungselemente, bei deren Betätigung mehrere Töne eines Akkords zu einer Linie in einer bestimmten Reihenfolge erklingen,
c) spezielle Auslösungselemente, bei deren Betätigung mehrere Töne eines Akkords zu einer Linie in einem bestimmten Rhythmus erklingen,
d) spezielle Auslösungselemente, bei deren Betätigung jeweils eine oder mehrere Linien optisch hervorgehoben werden,
e) spezielle Einrichtungen, mit deren Hilfe der jeweils aktuelle oder nächstfolgende Akkord eines abgespeicherten Musikstücks durch optische Hervorhebung einer Linie angezeigt wird,
f) spezielle Einrichtungen, mit deren Hilfe der jeweils als nächstes zu spielende Ton eines abgespeicherten Musikstücks durch optische Hervorhebung eines Tonauslösungselements angezeigt wird,
g) spezielle Einrichtung, mit deren Hilfe man die Tonhöhe zu allen auf den Linien angeordneten Tonauslösungselementen um das gleiche, beliebig wählbare Intervall verändern (transponieren) kann.

17. Auflage für das Bedienungsfeld eines vorhandenen Musikinstruments,
auf die ein System von Linien wie bei den Musikinstrumenten gemäß Anspruch 1 bis Anspruch 16 aufgebracht ist, das zu den Tonaulösungselementen des vorhandenen Musikinstruments paßt.

18. Auflage für das Bedienungsfeld eines vorhandenen Musikinstruments nach Anspruch 17,
dadurch gekennzeichnet,
daß es eine Vorrichtung enthält, die bei der Verwendung zusammen mit dem Musikinstrument die Tonhöhen der Tonauslösungselemente festlegt.

## Claims

1. A musical instrument with an operating panel bearing several different lines which each include several sound generating elements which may be operated individually, with all sound generating elements arranged on one line only generating tones of a predetermined chord which is a different one for each line.

2. The musical instrument as claimed in claim 1 wherein the sound generating elements are arranged along the lines in the order of pitch.

3. The musical instrument as claimed in claim 2 wherein the shape of each line in question repeats with each octave.

4. The musical instrument as claimed in one of the preceding claims wherein said lines differ in colour, thickness, type or in characteristic line interruptions.

5. The musical instrument as claimed in one of the preceding claims comprising three lines for the major chords tonic (1), dominant (2) and subdominant (3) of a key.

6. The musical instrument as claimed in one of claims 1 to 4 comprising three lines for the minor chords tonic (5), dominant (6) and subdominant (7) of a key.

7. The musical instrument as claimed in one of claims 1 to 4 comprising three lines for the major chords tonic (1), dominant seventh chord (4) and subdominant (3) of a key.

8. The musical instrument as claimed in one of claims 1 to 4 comprising three lines for the minor chords tonic (5), dominant seventh chord (8) and subdominant (7) of a key.

9. The musical instrument as claimed in one of the preceding claims wherein sound generating elements which belong to two different lines simultaneously and generate the same tone are only provided once.

10. The musical instrument as claimed in one of the preceding claims wherein the lines only meet at points where there are sound generating elements.

11. The musical instrument as claimed in one of claims 5 to 10 wherein in addition to the three existing lines three further lines are provided which correspond to the respective parallels in minor key for the present major chords or to the respective parallels in major key for the present minor chords, by using the sound generating elements provided.

12. The musical instrument as claimed in one of claims 1 to 4 wherein lines for more than three subsequent major chords in the cycle of fifths are provided, with the lines for every two adjacent chords in the cycle of fifths meeting at a common sound generating element.

13. The musical instrument as claimed in claim 12 wherein in addition to the existing lines for the major chords, lines for the respective parallels in minor key are provided, by using the sound generating elements present.

14. The musical instrument as claimed in one of the preceding claims wherein one, several or all lines are sinusoidal in shape.

15. The musical instrument as claimed in one of the preceding claims wherein the lines are threedimensional lines in space.

16. The musical instrument of one of the preceding claims wherein one or several of the following additional means are provided on the instrument:
a) special sound generating elements, the operation of which will simultaneously generate several tones of a chord of one line,
b) special sound generating elements, the operation of which will generate several tones of a chord of one line in a certain sequence,
c) special sound generating elements, the operation of which will generate several tones of a chord of one line in a certain rhythm,
d) special sound generating elements, the operation of which will result in an optical highlighting of one or more lines at a time,
e) special means by which the chord being played or the subsequent chord of a stored piece of music is indicated by optically highlighting a line,
f) special means by which the tone to be played next in a stored piece of music is indicated by optically highlighting a sound generating element,
g) special means by which the pitch for all sound generating elements arranged on the lines may be changed (transposed) by the same randomly selectable interval.

17. An overlay for the operating panel of an existing musical instrument bearing a system of lines as in the case of the musical instruments of claims 1 to 16, which system matches the sound generating elements of the existing musical instrument.

18. The overlay for the operating panel of an existing musical instrument as claimed in claim 17 comprising a means which, when used together with the musical instrument, will determine the pitch of the sound generating elements.

## Revendications

1. Instrument de musique avec tableau de commande,
sur lequel sont représentées différentes lignes ayant chacune plusieurs éléments agencés et individuellement manoeuvrables déclenchant un son, tous les éléments de déclenchement du son agencés sur une ligne ne générant cependant que des sons d'un accord prédéterminé et différent pour chaque ligne.

2. Instrument de musique selon la revendication 1,
caractérisé en ce que
les éléments de déclenchement du son sont agencés sur la ligne suivant la hauteur du son.

3. Instrument de musique selon la revendication 2,
caractérisé en ce que
la forme des lignes respectives est conservée pour chaque octave.

4. Instrument de musique selon l'une des revendications précédentes,
caractérisé en ce que
les lignes se différencient par leur couleur, leur épaisseur, leur type ou de par une discontinuité caractéristique.

5. Instrument de musique selon l'une des revendications précédentes,
caractérisé en ce que
il contient trois lignes pour les accords majeurs tonique (1), dominante (2) et sous-dominante (3) d'une tonalité.

6. Instrument de musique selon l'une des revendications 1 à 4,
caractérisé en ce que
il contient trois lignes pour les accords mineurs tonique (5), dominante (6) et sous-dominante (7) d'une tonalité.

7. Instrument de musique selon l'une des revendications 1 à 4,
caractérisé en ce que
il contient trois lignes pour les accords majeurs tonique (1), septième de dominante (4) et sous-dominante (3) d'une tonalité.

8. Instrument de musique selon l'une des revendication 1 à 4,
caractérisé en ce que
il contient trois lignes pour les accords mineurs tonique (5), septième de dominante (8) et sous-dominante (7) d'une tonalité.

9. Instrument de musique selon l'une des revendications précédentes,
caractérisé en ce que
les éléments de déclenchement du son appartenant à deux différentes lignes en même temps et générant le même son n'apparaissent qu'une seule fois.

10. Instrument de musique selon l'une des revendications précédentes,
caractérisé en ce que
les lignes se croisent sur les points où se trouvent les éléments déclenchant le son.

11. Instrument de musique selon l'une des revendications 5 à 10,
caractérisé en ce que
en supplément au trois lignes existantes sont apportées à l'aide des éléments déclenchant le son trois autres lignes qui correspondent aux équivalents mineurs des accords majeurs existants ou aux équivalents majeurs des accords mineurs existants.

12. Instrument de musique selon l'une des revendications 1 à 4,
caractérisé en ce que
plus de trois lignes correspondant à des accords majeurs se suivant dans le cycle des quintes sont établies, les lignes correspondant à deux accords voisins dans le cycle des quintes se croisant sur un élément commun déclenchant le son.

13. Instrument de musique selon la revendication 12,
caractérisé en ce que
en supplément aux lignes des accords majeurs existantes sont appliquées des lignes correspondant aux accords mineurs équivalents en utilisant les éléments déclenchant le son présents.

14. Instrument de musique selon l'une des revendications précédentes,
caractérisé en ce que
une, plusieurs ou toutes les lignes sont des sinusoïdes.

15. Instrument de musique selon l'une des revendications précédentes,
caractérisé en ce que
les lignes sont des lignes à trois dimensions dans l'espace.

16. Instrument de musique selon l'une des revendications précédentes,
caractérisé en ce que
l'un ou plusieurs des dispositifs supplémentaires suivants est/sont ajouté(s) à l'instrument :
a) éléments déclenchant le son spéciaux qui génèrent plusieurs sons d'un accord d'une ligne quand ils sont activés,
b) éléments déclenchant le son spéciaux qui génèrent plusieurs sons d'un accord d'une ligne dans un certain ordre quand ils sont activés,
c) éléments déclenchant le son spéciaux qui génèrent plusieurs sons d'un accord d'une ligne dans un certain rythme quand ils sont activés,
d) éléments déclenchant le son spéciaux relevant optiquement une ou plusieurs lignes quand ils sont activés,
e) dispositifs spéciaux à l'aide desquels chaque accord actuel ou prochain d'un morceau de musique mémorisé est indiqué en relevant optiquement une ligne,
f) dispositifs spéciaux à l'aide desquels chaque prochain son devant être joué d'un morceau de musique mémorisé est indiqué en relevant optiquement un élément déclenchant le son,
g) dispositif spécial à l'aide duquel à l'aide duquel on modifie (transpose) la hauteur du son de tous les éléments déclenchant le son ordonnés sur les lignes d'un même intervalle choisi quelconque.

17. Revêtement du tableau de commande d'un instrument de musique utilisé, sur lequel est appliqué un système de lignes comme pour les instruments de musique selon les revendications 1 à 16 s'adaptant aux éléments déclenchant le son de l'instrument de musique utilisé.

18. Revêtement du tableau de commande d'un instrument de musique utilisé selon la revendication 17,
caractérisé en ce que,
il possède un dispositif qui, utilisé avec l'instrument de musique, détermine la hauteur de son des éléments déclenchant le son.
